# EUROPEAN PATENT APPLICATION

(11) **EP 4 516 464 A1**
(43) Date of publication of application: **05.03.2025**
(21) Application number: 24194211.9
(22) Date of filing: 12.08.2024
(51) Int. Cl.: B25J 9/16, G05B 19/42

(54) **SYSTEMS AND METHODS FOR ROBOT AUTOMATION**

(30) Priority: 17.08.2023 US 202318451626
(71) Applicant: Spirit AeroSystems, Inc., Wichita, KS 67210-0008 (US)
(72) Inventor: SAY, Kimsuor, Wichita, 67210 (US); RAO, Bharath, Wichita, 67210 (US)
(74) Representative: HGF

(57) **Abstract**

A robot automation system facilitates automated robotic manufacturing processes by employing a teaching subsystem including a tracking assembly that tracks movement of the mapping tool in a teaching workspace. A computing device in communication with the tracking assembly and the mapping tool receives tracking data from the tracking assembly and the mapping tool indicating movement of the mapping tool along a working path. Based on the tracking data, the computing device automatically generates robot instructions. A robot controller receives the robot instructions from the computing device and executes the robot instructions whereby the robot controller controls a robot and an end effector to conduct the automated robotic manufacturing process.

## Description

### FIELD

The present disclosure generally relates to a robot automation system and method of automated robotic operation. More particularly, the disclosure relates to an automated robotic sealing system and automated method of sealing components through predictive path planning.

### BACKGROUND

Conventional automated robotic manufacturing processes require preprogramming the robot, which can be time consuming and expensive. One example of an automated robotic manufacturing process that has onerous preprogramming requirements is robotic sealing - that is, using an industrial robot with a sealing end effector to apply sealant to one or more seams of a part. Many other automated robotic manufacturing processes also require significant preprogramming of the robot.

For 'low-mix,' high volume parts (e.g., parts used in mass-produced automobiles), it can be worthwhile to expend the time and money it takes to preprogram robots to automate robotic manufacturing processes. However, for 'high-mix,' low volume parts (e.g., some airframe parts used in the aerospace industry), the time and money required to program robots to automate certain manufacturing tasks is prohibitively expensive in view of the relatively low production output. Accordingly, many processes in high-mix manufacturing are still performed manually.

### SUMMARY

The present disclosure provides a robot automation system and computer-implemented method for robot operation which replicates a teaching workspace in an augmented reality environment, tracks manual simulations performed in the teaching workspace, and automatically generates robot instructions based on the tracking data. The robot instructions configure a robotic assembly to perform an automated robot manufacturing process based on the manual simulations that were performed in the teaching workspace. In particular, one process to be performed by the robot automation system is a sealing process for applying sealant (broadly, a working solution) to one or more components.

In one aspect, a computer-implemented method of performing an automated robotic manufacturing process comprises receiving image data regarding a teaching workspace and a teaching structure disposed in the teaching workspace. Based on the received image data, movement of a mapping tool along a working path within the teaching workspace is tracked. Robot instructions are automatically generated for controlling a robot to move along a robot path corresponding to the working path based on the tracked movement of the mapping tool along the working path. The robot is instructed to perform the automated robotic manufacturing process on a process structure based on said robot instructions.

In another aspect, a system for automatic programming of a robotic assembly to perform an automatic robotic process comprises a tracking assembly, a mapping tool, and a computing device having a processor and a memory. The processor is in communication with said tracking assembly and said mapping tool. Said processor is configured to receive tracking data from the tracking assembly and the mapping tool indicating movement of the mapping tool along a working path within a teaching workspace. Based on said tracking data, said processor automatically generates robot instructions. Said robot instructions are configured for execution by a robot controller of the robotic assembly to cause the robotic assembly to perform the automatic robotic manufacturing process by moving along a robot path corresponding to the working path.

In another aspect, an automation system for facilitating automated robotic manufacturing processes comprises a teaching subsystem comprising a mapping tool and a tracking assembly configured for tracking movement of the mapping tool in a teaching workspace. A computing device has a processor and a memory. The processor is in communication with the tracking assembly and the mapping tool. Said processor is configured to receive tracking data from the tracking assembly and the mapping tool indicating movement of the mapping tool along a working path. Based on said tracking data, the processor automatically generates robot instructions. A robotic assembly comprises a robot, an end effector, and a robot controller configured to receive the robot instructions from the computing device and execute the robot instructions whereby the robot controller controls the robot and the end effector to conduct the automated robotic manufacturing process.

In another aspect, an end effector for use in a robotic assembly comprises a frame. A dispensing assembly is mounted on the frame and configured for applying sealant to a seam of a structure. A seam tracker is mounted on the frame and configured to track the seam on the structure as the dispensing assembly is moved along the seam to apply the sealant. An inspector is mounted on the frame and configured to inspect the sealant applied to the seam by the dispensing assembly.

In another aspect, a mapping tool for communicating information for use in an augmented reality environment comprises a body enclosing internal electrical components. A stylus assembly is movably attached to the body for engaging a structure in a workspace. A handle is attached to the body for grasping the mapping tool to manipulate the mapping tool within the workspace.

Other objects and features of the present disclosure will be in part apparent and in part pointed out hereinafter.

### BRIEF DESCRIPTION OF THE DRAWINGS

FIG. 1 is a schematic illustration of one embodiment of a robot automation system according to the present disclosure;
FIG. 2 is a block diagram of a computing device of the robot automation system;
FIG. 3 is a schematic illustration of a teaching workspace including a tracking assembly viewing an example structure and mapping tool in the teaching workspace;
FIG. 4 is a perspective of the mapping tool;
FIG. 5 is another perspective of the mapping tool;
FIG. 6 is an enlarged fragmentary perspective of the mapping tool in FIG. 4;
FIG. 7 is the enlarged fragmentary perspective of FIG. 6 with a stylus of the mapping tool removed;
FIG. 8 is a fragmentary cross-section of the mapping tool;
FIG. 9 is a cross section of the stylus;
FIG. 10 is an illustration of a network architecture of a robotic assembly of the sealing system;
FIG. 11 is a block diagram of a control system of the robotic assembly;
FIG. 12 is an elevation of the robotic assembly;
FIG. 13 is a perspective of an end effector of the robotic assembly;
FIG. 14 is a schematic illustration of a viewing area of a seam tracking/inspection assembly of the robotic assembly;
FIG. 15 is a flow chart representing an example method for controlling operation of the automated sealing system;
FIG. 16 is an illustration of an operator using the mapping tool to automatically program a robot;
FIG. 17 is a screen shot of a real time augmented reality environment depicting the mapping tool as it is being used in FIG. 16;
FIG. 18 is an illustration of a robotic assembly conducting an automated sealing operation; and
FIG. 19 is a screen shot of the augmented reality environment showing the robotic assembly as it is being used in FIG. 18.

Corresponding parts are indicated by corresponding reference characters throughout the several views of the drawings.

### DETAILED DESCRIPTION

This disclosure generally pertains to methods, devices, and systems that facilitate automatic or semi-automatic programming of industrial robots to perform automated manufacturing processes. More particularly, the present disclosure provides a robot automation system that is computer-implemented and supported through automated solutions and components including computing devices, cameras, sensors, and robots for carrying out robotic manufacturing processes (e.g., sealing) on structures such as airframe parts. Although each of the disclosed mechanical, automation, computing, and robotic elements can be used separately for specific functions, it is contemplated that they may be used in conjunction as a comprehensive robot automation solution. Broadly, the comprehensive robot automation system includes a teaching subsystem configured to view and digitally replicate a teaching workspace containing an example structure with at least one profile (e.g., a seam) that is substantially the same as a 'manufactured structure' to be processed using an automated robotic manufacturing process. The teaching subsystem is configured to track movement of a mapping tool within the teaching workspace to determine a working path along which a robot will move when conducting the automated robotic manufacturing process. A computing device receives the tracking data and uses the tracking data to automatically generate robot instructions for the automated robotic manufacturing process. The robot instructions are executed by a robot controller, which causes a robot to perform the automated robotic manufacturing process on the manufactured structure.

The automation system of the present disclosure is therefore able to quickly and cost-effectively adapt and tailor the automated robotic manufacturing processes to new types of manufactured structures. Using an artificial intelligence-based robot programming engine, the movement (e.g., speed, positioning, etc.) of the robotic assembly can be modulated to achieve high performance in completing the programmed task and ensure that the task is completed to required specifications. In one embodiment, the system provides for "single pass" capability so that the processes are completed without the need for any rework by a machine or manual intervention. This allows the system to meet and exceed the throughput capabilities of the corresponding manual processes. Additionally, the robotic assembly used in the system may be configured to provide verification and inspection of the automated process in real-time to ensure process accuracy. Therefore, the automation system of the present disclosure is a viable replacement for the manual processes conventionally used in high-mix, low volume manufacturing.

In one exemplary embodiment, this disclosure pertains to methods, devices, and systems that facilitate automatic or semi-automatic programming of an industrial robot to perform an automated robotic sealing process. While the disclosure herein provides an example of an automated sealing system and process, it will be understood that the automation system may have applications to processes other than sealing. For example, the system may be used to complete other bonding or connection processes such as welding, riveting, sanding, etc. Additionally, the system could be used to map and track structures within a workspace to instruct robotic assemblies to perform any number of tasks within any number of industries. Accordingly, the robot automation systems and processes disclosed herein may have implications outside of the aerospace industry. Thus, the system may be implemented for any manufacturing or assembly processes using robotic automation. Still other implementations of the robot automation systems and processes are envisioned without departing from the scope of the disclosure.

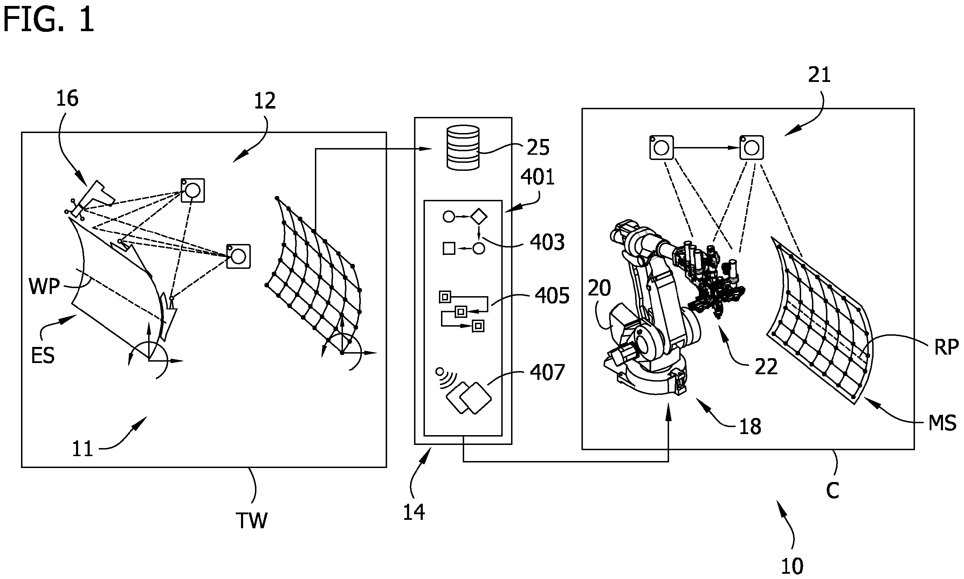

Referring now to FIG. 1, a robot automation system 10 is constructed according to the principles of the present disclosure. In the illustrated embodiment, the robot automation system 10 is an automated sealing system configured to seal or bond one or more components of a structure. In one embodiment, the system 10 is configured to seal components of an airframe for use in the assembly of an airplane or aerospace structure. Thus, the following description will describe the system 10 within the context of component sealing. However, the system 10 and any methods of operation have application to other manufacturing processes that can be carried out by robot. For example, and without limitation, the system 10 could be used in the manufacture of automotive components, as well as other articles of manufacture. Although a fully automated system 10 is disclosed, a semi-automated system could be used without departing from the scope of the disclosure. Thus, at least some aspects of the process may be performed manually using components of the system 10 or components separate from the system.

Generally, the robot automation system 10 comprises a teaching subsystem 11 used for automated robot programming and a robotic assembly 18 for conducting automated robotic sealing based on the programming generated using the teaching subsystem. The teaching subsystem 11 comprises a tracking assembly 12 and a mapping tool 16 located in a teaching workspace TW. The teaching workspace TW also contains an example structure ES that has at least one seam with a profile corresponding to a seam profile in a manufactured structure MS that will be acted upon by the robotic assembly 18. The tracking assembly 12 is generally configured for tracking the location of the mapping tool 16 and the example structure ES in the teaching workspace TW. More particularly, the tracking assembly 12 is configured for tracking movement of the mapping tool 16 in relation to the example structure ES to determine a manually simulated working path WP of the mapping tool along the example structure. A human operator moves the mapping tool 16 along the working path WP to simulate a robot path RP that the robotic assembly 18 will take when performing the sealing operation. The tracking assembly 12 and mapping tool 16 are operatively connected to a computing device 14 for transmitting the tracking data to the computing device in real time. As will be explained in further detail below, the computing device 14 comprises a memory 25 configured to store the tracking data. Based on the tracking data, the computing device 14 is configured to automatically generate robot instructions that program the robotic assembly 18 for performing a specified sealing operation on the manufactured structure MS.

The robotic assembly 18 generally comprises a robot 20 and an end effector 22 mounted on the robot. The robot 20 and end effector 22 preferably operate in a robot cell C containing the manufactured structure MS. A tracking system 21 similar to the tracking system 12 is used to track the location of the robot 20 and the end effector 22 in relation to the manufactured structure MS. In the illustrated embodiment, the end effector 22 is a sealing end effector configured to perform a sealing operation to bond one or more components. It will be understood that the robotic assembly 18 could be otherwise constructed without departing from the scope of the disclosure. For example, the end effector 22 could be replaced with a different type of end effector to configure the robotic assembly 18 to perform a different function. The robotic assembly 18 is configured to perform the desired automated sealing operation based on the robot instructions generated by the computing device 14.

In one or more embodiments, the computing device 14 can be configured to run an artificial intelligence-based robot programming engine 401 for generating robot instructions. The tracking data from the teaching subsystem 11 is used as the primary input to the programming engine 401, and the output of the programming engine is robot instructions that are executable by the robotic assembly 18 to cause the robotic assembly to perform automated sealing in accordance with desired process specifications. In the illustrated embodiment, the programming engine 401 comprises a task planning module 403, a path planning module 405, and a motion planning module 407. Each of the modules 403, 405, 407 comprises processor-executable instructions stored in memory for execution by a processor of the computing device 14. When executed, the task planning module 403 automatically configures the robot instructions to comply with task definitions. The task definitions may be predefined, e.g., input to the programming engine 401 by an operator. In one or more embodiments, the task definitions can include process specifications (e.g., information about the required thickness of a sealant fillet). When the path planning module 405 is executed, it automatically configures the robot instructions to define a notional robot path RP that corresponds to the working path WP defined in the tracking data received from the teaching subsystem 11. When the motion planning module 407 is executed, it automatically configures the robot instructions to modulate the motion of the robotic assembly 18 along the robot path RP. For example, because the robot path RP is known based on the tracking data from the teaching subsystem 11, the motion planning module 407 can automatically configure the robot instructions to modulate the speed of the robotic assembly 18 to account for changes in the surface profile of the manufactured structure MS. In one or more embodiments, the motion planning module 407 is derived from a machine learning model that is trained on a data set of previous robot instructions for automated sealing (or any other automated robotic manufacturing process for which the robot automation systems of this disclosure are put to use).

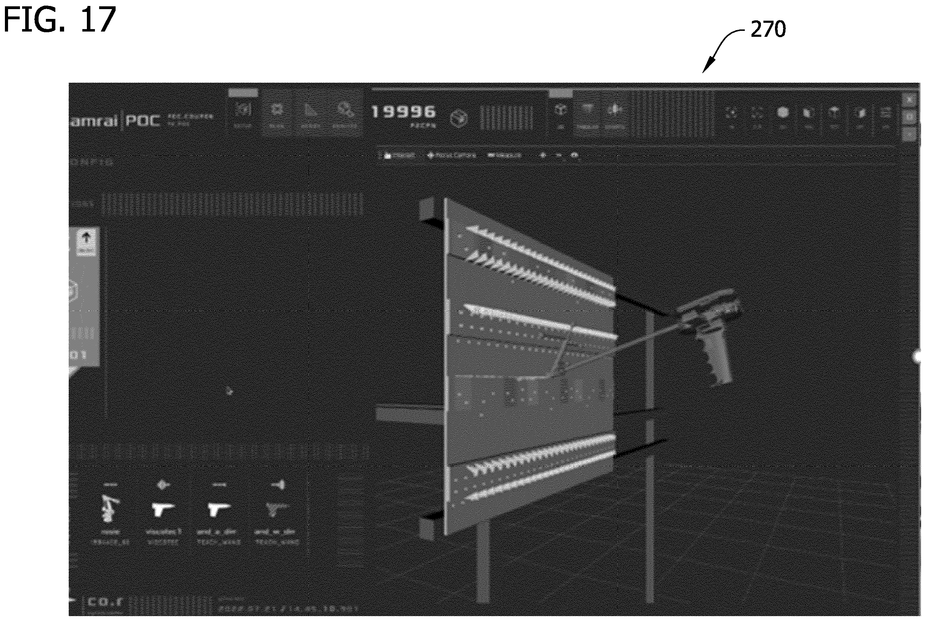

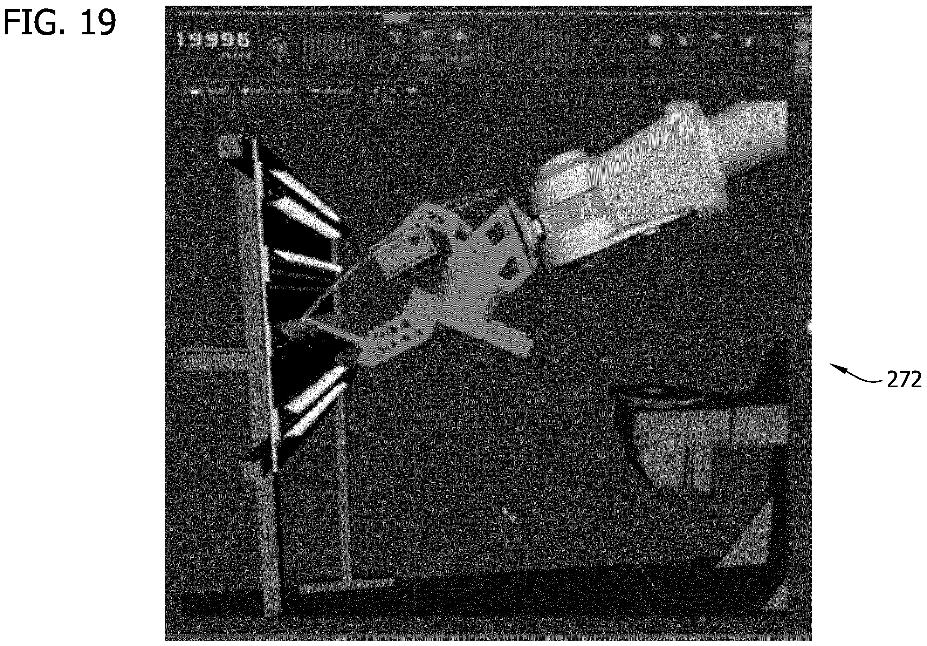

In addition to generating robot instructions, the computing device 14 (or another computing device associated with the tracking assembly 12 or tracking system 21) can be further configured to display a real time augmented reality environment 270 (FIG. 17) (e.g., animation) representing the mapping tool 16 and example structure ES in the teaching workspace TW during the teaching process and/or a real time augmented reality environment 272 (FIG. 19) representing the robotic assembly 18 and the manufactured structure MS undergoing sealing during the robotic sealing process. The real time augmented reality environment 270, 272 may include three-dimensional models of the relevant components animated to show real time movement in the real environment. When programming the robot instructions, the computing system 14 may derive the notional robot path RP based on the animation of the augmented reality environment 270 for the teaching subsystem 11.

In FIG. 1, the computing device 14 is representatively shown as a single computing device. However, it will be understood that the computing device 14 may comprise a computing assembly made up of multiple computing devices operatively connected to the components of the system 10 and/or to other computing devices to control operation of the system. The computing device 14 (broadly, a computer) includes a CPU or processor (e.g., a control system processor) and RAM or memory (broadly, non-transitory computer-readable storage medium). The computing device 14 controls and operates the various components of the automation system 10. Broadly, the memory includes (e.g., stores) processor-executable instructions for controlling the operation of the automation system 10 and the components thereof. The instructions embody one or more of the functional aspects of the automation system 10 and the components thereof, as described herein, with the processor executing the instructions to perform said one or more functional aspects. The components of the automation system 10 may be in wired or wireless communication with the control system. Other configurations of the control system are within the scope of the present disclosure.

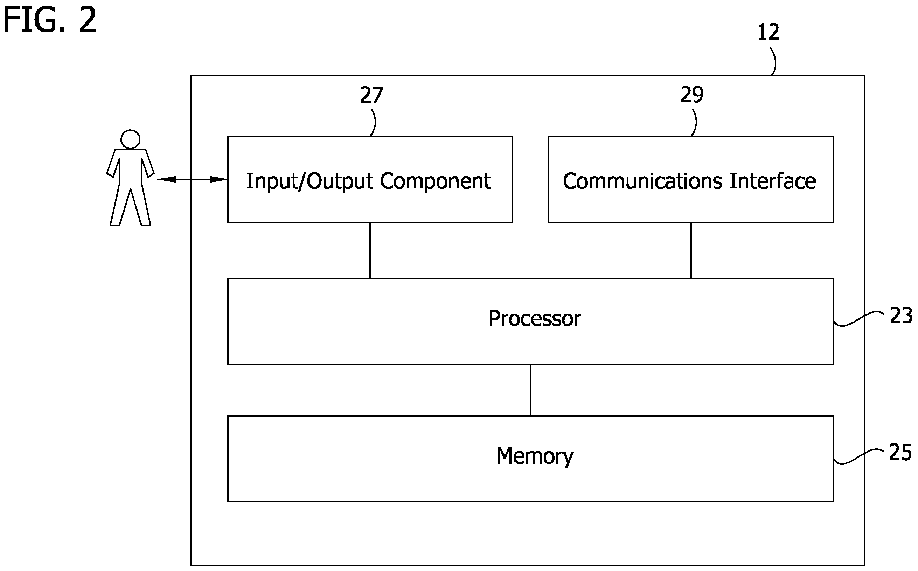

Referring to FIG. 2, the computing device 14 may be used to control the operation of the automation system 10, or components thereof, as described. The computing device 14 may be operated by a user in accordance with one embodiment of the present invention. The computing device 14 may include, but is not limited to, computing devices associated with user interfaces to control the automation system 10. The computing device 14 may also include servers, desktops, laptops, mobile computing devices, stationary computing devices, computing peripheral devices, smart phones, and wearable computing devices. In some variations, the computing device 14 may be any computing device capable of the described method for sealing. In the illustrated embodiment, the computing device 14 includes a processor 23 for executing instructions. In some embodiments, executable instructions are stored in a memory 25. The processor 23 may include one or more processing units, for example, a multi-core configuration. Memory 25 is any device allowing information such as executable instructions and/or written works to be stored and retrieved. Memory 25 may include one or more computer readable media.

The computing device 14 may also include an input/output component 27 for receiving information from and providing information to the user. For example, the input/output component 27 may be any component capable of conveying information to or receiving information from the user. More specifically, input/output component 27 may be configured to provide inputs and outputs for controlling the automation system 10. Thus, the input/output component 27 is configured to include inputs for controlling a sealing operation.

The input/output component 27 may include an output adapter such as a video adapter and/or an audio adapter. The input/output component 27 may alternatively include an output device such as a display device, a liquid crystal display (LCD), organic light emitting diode (OLED) display, or "electronic ink" display, or an audio output device, a speaker or headphones. The input/output component 27 may also include any devices, modules, or structures for receiving input from the use. Input/output component 27 may therefore include, for example, a keyboard, a pointing device, a mouse, a touch sensitive panel, a touch pad, a touch screen, or an audio input device. A single component such as a touch screen may function as both an output and input device of input/output component 27. Alternatively, the input/output component 27 may include multiple sub-components for carrying out input and output functions.

The computing device 14 may also include a communications interface 29, which may be communicatively couplable to a remote device such as a remote computing device, a remote server, or any other suitable system. The communications interface 29 may include, for example, a wired or wireless network adapter or a wireless data transceiver for use with a mobile phone network, Global System for Mobile communications (GSM), 3G, 4G, 5G or other mobile data network or Worldwide Interoperability for Microwave Access (WIMAX). The communications interface 29 may be configured to allow the computing device 14 to interface with any other computing device or network using an appropriate wireless or wired communications protocol such as, without limitation, BLUETOOTH^{®}, Ethernet, or IEE 802.11. Thus, the communications interface 29 allows the computing device 14 to communicate with any other computing devices with which it is in communication or connection.

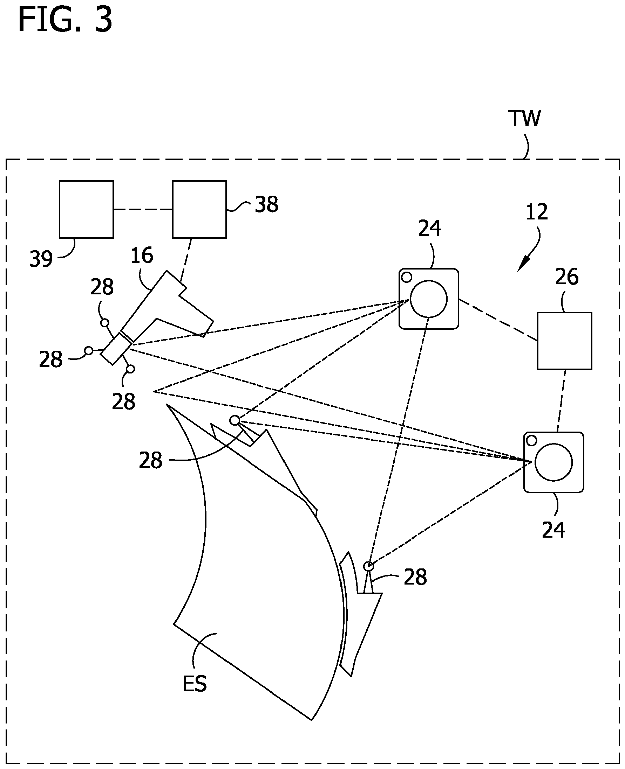

Referring to FIG. 3, the tracking assembly 12 may comprise an array of cameras 24 (e.g., motion capture cameras) and a tracking computer 26 operatively connected to the cameras. The cameras 24 are configured to acquire images of the components in the teaching workspace TW. During the teaching stage, the teaching workspace TW contains the example structure ES, the mapping tool 16, and the cameras 24. The mapping tool 16 is manually operated, so the teaching workspace TW should be safe for human operators. In certain embodiments, the robotic assembly 18 may reside outside the teaching workspace TW, e.g., within a separate robotic cell C with restricted access for operator safety. It is also conceivable that the robotic assembly 18 may reside partially or entirely within the teaching workspace TW (e.g., if the robot 20 is a human-safe co-bot).

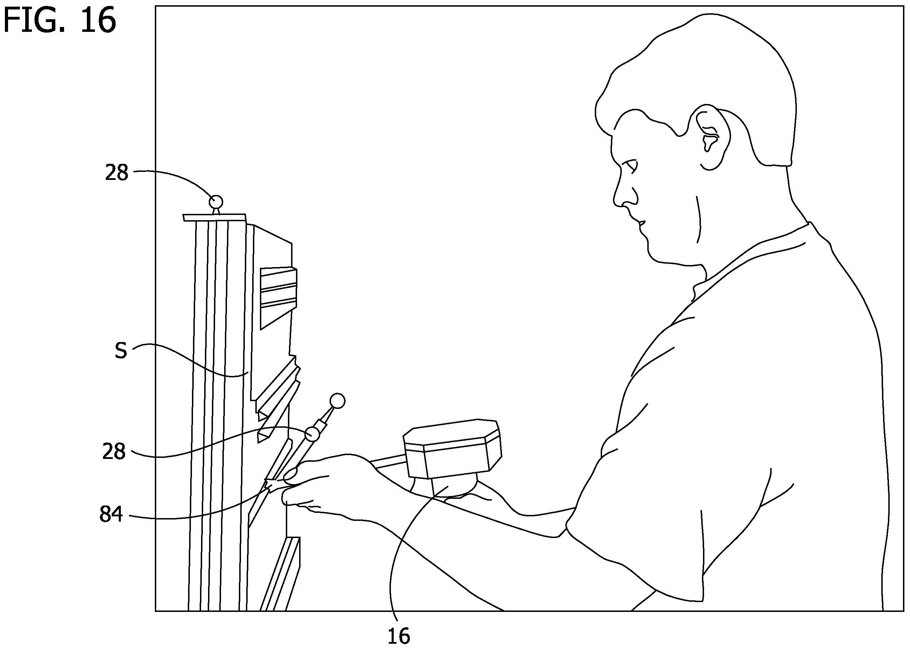

The tracking assembly 12 may employ similar principles to the tracking system described in U.S. Patent No. 11,631,184, which is assigned to the same assignee as the present disclosure. U.S. Patent No. 11,631,184 is hereby incorporated by reference in its entirety for all purposes. Broadly speaking, the tracking computer 26 is configured to define a spatial frame of reference for the teaching workspace TW and determine the location of the example structure ES and mapping tool 16 in the defined frame of reference. Within the teaching workspace TW, the cameras 24 are configured to acquire video images so that, not only is the position and orientation of the components (e.g., example structure ES) in the workspace TW captured by the cameras, but any movement of the components, such as the mapping tool 16, are also captured by the cameras. The cameras 24 are then configured to communicate those images to the tracking computer 26 for processing. For example, the tracking computer 26 is configured to determine the position, orientation, and/or movement paths of the components in the teaching workspace TW based on the images captured by the cameras 24. The cameras 24 are dispersed throughout the teaching workspace TW such that numerous angles of example structure ES and mapping tool 16 are able to be captured by the cameras. In the illustrated embodiment only two cameras 24 are shown. However, it will be understood that any number of cameras 24 may be provided to acquire the necessary angles of the components in the teaching workspace TW. The tracking computer 26 may communicate with the computing device 14, and the computing device may use tracking information from the tracking computer to automatically generate robot instructions. In addition, the computing device 14 (or the tracking computer 26) can use the tracking information to generate a real time augmented reality environment 270 (FIG. 17 showing a real time augmented reality environment 270 corresponding to the real teaching workspace TW at the point in time shown in FIG. 16) representative of the teaching workspace and the movements occurring therein.

The tracking assembly 12 may use OptiTrack, ART, or Vicon system, or any other suitable 3-dimensional positional tracking system. The tracking computer 26 may include a processor, a memory, user inputs, a display, and the like. The tracking computer 26 may also include circuit boards and/or other electronic components such as a transceiver or external connection for communicating with other computing devices of the robot automation system 10. The tracking assembly 12 may be a macro area precision position system (MAPPS) camera network system and may be compatible with cross measurement from other metrology devices. MAPPS achieves precise positional tracking of objects in a dynamic space in real time via a plurality of cameras such as cameras 24.

The tracking assembly 12 uses tracking targets 28 that are mountable on the components in the teaching workspace TW to configure the components for being tracked by the tracking computer 26. During use, each tracking target 28 that is visible in a camera image provides a known point location within the predefined frame of reference for the teaching workspace TW. The tracking targets 28 are disposed on the example structure ES and mapping tool 16 in sufficient numbers and locations to accurately track the position, orientation, and/or movement of the components in the teaching workspace TW. In one embodiment, the tracking targets 28 comprise retroreflective targets, active LED markers, or a combination thereof. Photogrammetry surveys of the visible targets 28 within the teaching workspace TW enables the tracking computer 26 to create rigid body and motion tracking with aligned point sets in relation to the defined frame of reference for the teaching workspace TW. This information can be used to create the augmented reality environment 270 (FIG. 17). For example, the computing device 14 or tracking computer 26 may combine the digitally acquired images (e.g., three dimensional models) of the example structure ES and mapping tool 16 and overlay those images on a representation of the teaching workspace TW to provide a digital environment replicating the actual teaching workspace.

Referring to FIGS. 3-6, in an exemplary embodiment, the mapping tool 16 comprises a main body 30 enclosing the internal electrical components of the mapping tool 16, a stylus assembly 32 movably attached to the main body for engaging the example structure ES in the teaching workspace TW to follow the surface profile of the structure, and first and second handles 34, 36 (broadly, a handle) attached to the main body for grasping the mapping tool to manipulate the mapping tool within the workspace. A mapping tool controller 38 (FIG. 3) may be disposed within the main body 30 and configured to control operation of the mapping tool 16. Additionally, a transmitter 39 may also be disposed within the main body 30 and configured to wirelessly transmit signals to computing devices external to the mapping tool 16, such as computing device 14. In the illustrated embodiment, a power switch 40 is mounted on a top of the main body 30. The power switch 40 is operatively connected to the mapping tool controller 38 such that toggling the switch is configured to turn the mapping tool 16 on and off. An indicator light 41 on the main body 30 may illuminate when the mapping tool 16 is powered on. A port 43 may also be disposed on the main body 30 and configured for providing a wired connection to the internal electrical components (e.g., for charging a battery (broadly, electrical power supply) of the mapping tool 16).

The mapping tool controller 38 and wireless transmitter 39 are shown schematically in FIG. 3. The mapping tool controller 38 and wireless transmitter 30 may be operatively connected to the computing device 14 for communicating information between the mapping tool 16 and the computing device as will be discussed in greater detail below. Thus, in one embodiment, the mapping tool 16 is configured for wireless communication with the computing device 14. However, the mapping tool 16 could be connected to the computing device 14 via a wired connection without departing from the scope of the disclosure. For example, a wired connection may be facilitated by the port 43.

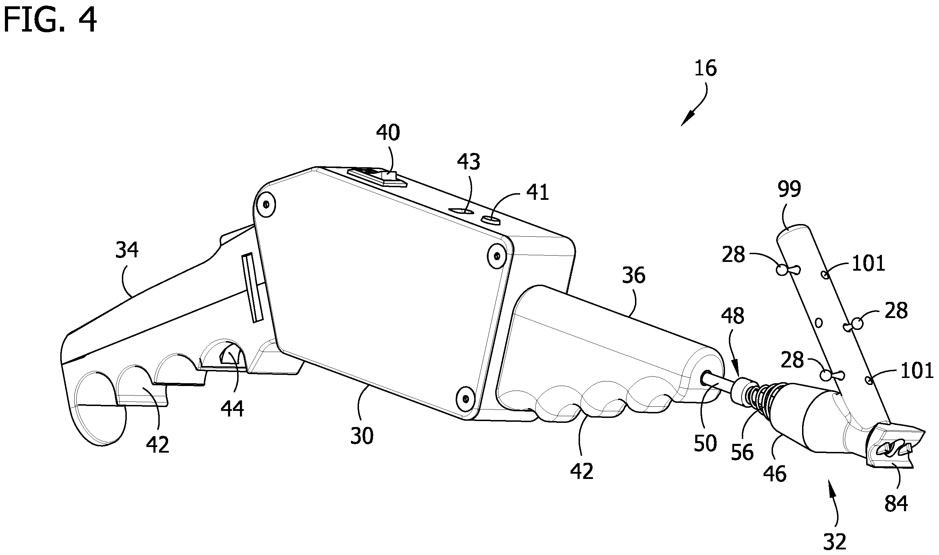

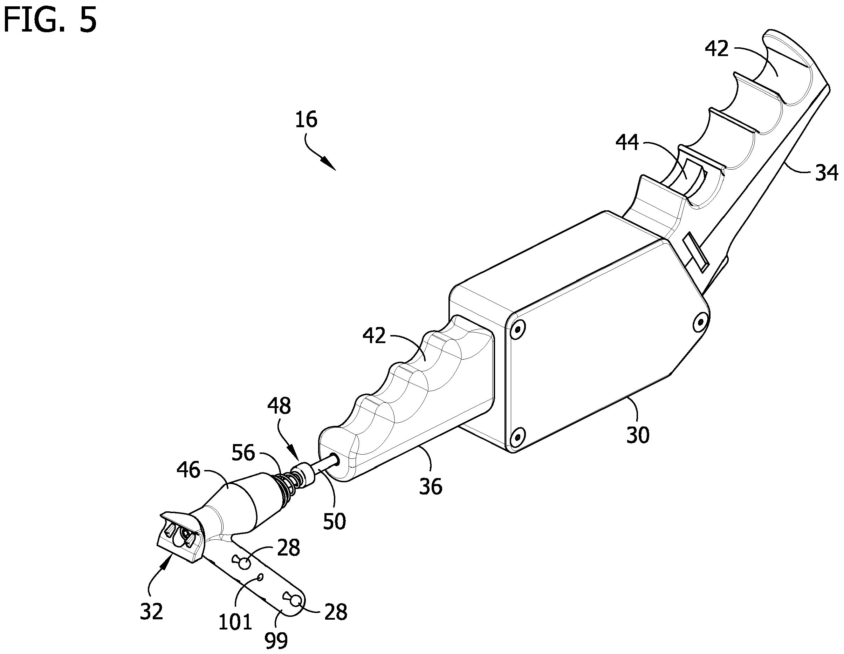

Referring to FIGS. 4 and 5, the first handle 34 extends proximally from a proximal end of the main body 30, and the second handle 36 extends distally from a distal end of the main body. Each handle 34, 36 includes a grip surface 42 on a bottom of the handle to facilitate grasping the handles with the operator's hands. In the illustrated embodiment, the grip surfaces 42 comprise a plurality of rounded grooves sized and shaped to receive portions of respective fingers of the operator. A trigger 44 is disposed within one of the rounded grooves of the grip surface 42 on the first handle 34. The trigger 44 is operatively connected to the mapping tool controller 38 such that actuation of the trigger is configured to initiate a mapping operation of the mapping tool 16. For example, the mapping tool controller 38 may initiate or instruct initiation of recording of a mapping path of the stylus assembly 32 by the tracking assembly 12 upon actuation of the trigger 44, as will be discussed in greater detail below. It will be understood that the handles 34, 36 could be otherwise configured without departing from the scope of the disclosure.

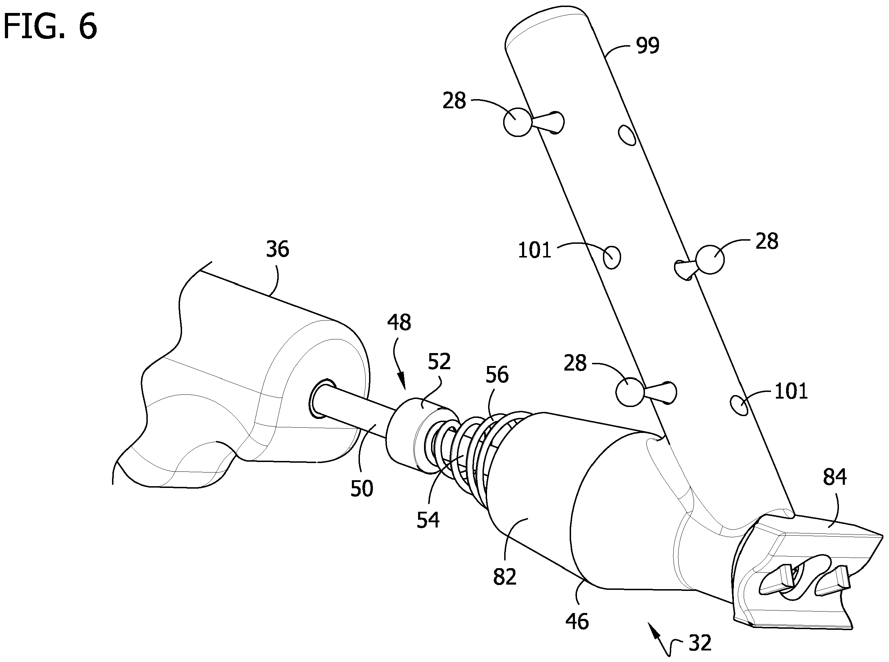

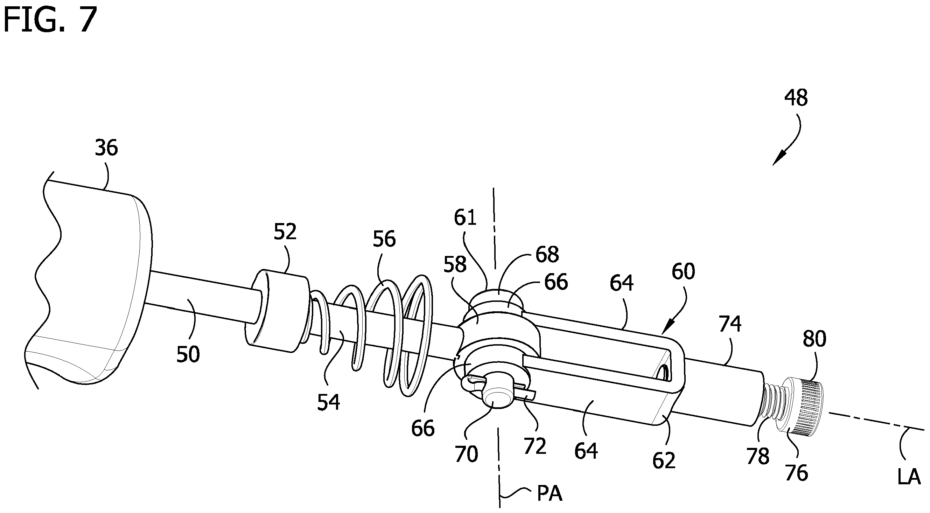

Referring to FIGS. 6 and 7, the stylus assembly 32 comprises a stylus 46 and a mounting assembly 48 connecting the stylus to the main body 30. In the illustrated embodiment, the mounting assembly 48 comprises a mounting rod 50 extending distally from the distal end of the main body 30 through the second handle 36 and distally past the second handle. An annular ring 52 is disposed around a distal end of the mounting rod 50, and a guide rod 54 extends distally from the mounting rod through the annular ring. A spring 56 may be seated on a distally facing surface of the annular ring 52 and extend distally from the annular ring around the guide rod 54. In the illustrated embodiment, the spring 56 comprises a tapered spiral spring captured between a distal surface of the annular ring 52 and a proximal end of the stylus 46. Thus, the spring 56 is configured to bias the stylus 46 away from the annular ring 52. As a result, the stylus 46 is configured to float on the mounting assembly 48. Therefore, when an axial force (i.e., a force extending along a longitudinal axis LA of mounting assembly) above a spring force of the spring 56 is exerted on the stylus 46, the spring will compress causing the stylus to move toward the second handle 36. As will be discussed in greater detail below, this movement of the stylus 46 along the axis of the mounting assembly 48 in response to engagement with the example structure ES is tracked by the tracking assembly 12 to map the surface profile of the structure.

The mounting assembly 48 further comprises a joint connection for providing articulation of the stylus 46 relative to the mounting rod 50 and second handle 36. In the illustrated embodiment, the joint connection comprises a gimbal joint for facilitating pivoting of the stylus 46 about a pivot axis PA (FIG. 7) in relation to the mounting rod 50, main body 30, and handles 34, 36. When the mapping tool 16 is used during a robot teaching process, the distal end portion of the stylus 46 is engaged with the example structure ES and glides along a desired path. The articulating joint enables the stylus 46 to automatically pivot about the pivot axis PAin response to the changes in the surface of the example structure ES so that the angle of the stylus about the pivot axis PA naturally follows the geometry of the structure without need for manual angular adjustment.

In the illustrated embodiment, the gimbal joint is formed by a gimbal ring 58 mounted on a distal end of the guide rod 54, and a fork 60 pivotably attached to the gimbal ring by a pin 61. The gimbal ring 58 comprises an annular ring member defining an opening that faces the pivot axis PA of the gimbal joint. In the illustrated embodiment, the gimbal ring 58 is formed integrally with the guide rod 54. However, the gimbal ring 58 could be formed separately from the guide rod 54 and suitably attached to the guide rod without departing from the scope of the disclosure. The fork 60 comprises a base 62 and a pair of arms 64 extending proximally from the base. Each arm 64 terminates at a free end margin 66 defining a pin opening. The free end margins 66 are disposed on opposite sides of the gimbal ring 58 such that the pin openings in the free end margins are aligned with the opening in the gimbal ring. The pin 61 comprises a head 68 and a shaft 70 extending from the head. The head 68 seats on an outer surface of one of the free end margins 66 of the arms 64 and is sized such that the head is larger than the pin opening in the free end margin. The shaft 70 is sized and shaped to be received through the openings in the arms 64 and the gimbal ring 58 providing a pin connection between the gimbal ring and fork 60. A clip 72 may be received in an end of the shaft 70 of the pin 61 to retain the pin in the openings. As a result, the fork 60 is configured to pivot about the gimbal ring 58 to facilitate articulation of the stylus 46 about the pivot axis PAin relation to the shaft 50, main body 30, and handles 34, 36.

A post 74 extends distally from the base 62 of the fork 60 and defines a threaded passage extending axially through the post along the longitudinal axis LA of the mounting assembly 48. A screw 76 is receivable in the threaded passage of the post 74. In particular, a shaft 78 of the screw 76 is received in the threaded passage of the post 74, and a head 80 of the screw 76 is configured to engage an interior surface of the stylus 46 to retain the stylus to the mounting assembly 48.

Referring to FIGS. 6, 8, and 9, the stylus 46 comprises an elongate body 82 including a mapping head 84 disposed at a distal end of the body. The mapping head 84 of the stylus 46 is configured to generally match the size and shape of an operation end of the end effector 22 on the robotic assembly 18. Thus, the engagement of the stylus 46 with the surface of the example structure ES will mimic that of the end effector 22 to provide an accurate teaching of how to engage the end effector with the structure to perform the intended operation as will be discussed in further detail below. In the illustrated embodiment, the end effector 22 comprises a sealer and the mapping head 84 is configured to have the same configuration as the operation end of the sealer. Additionally, the mapping head 84 is shown as being integrally formed with the body 82. However, the mapping head 84 could be formed separately from the body 82 and suitably attached to the body without departing from the scope of the disclosure. Therefore, the mapping head 84 could be removed from the elongate body 82 and replaced with another mapping head to match the operation end of another end effector. For instance, the mapping tool 16 could comprise a set of interchangeable mapping heads 84, each corresponding to a different type of sealant nozzle that can be used on the robotic assembly 18.

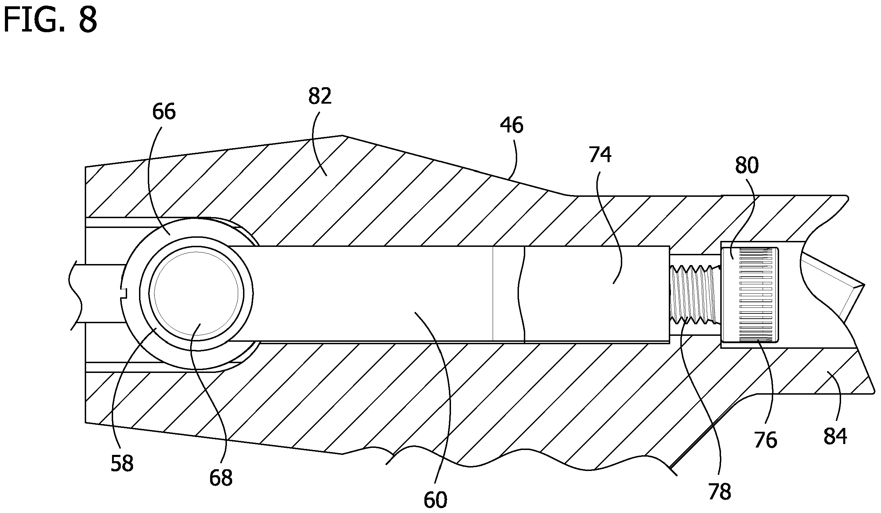

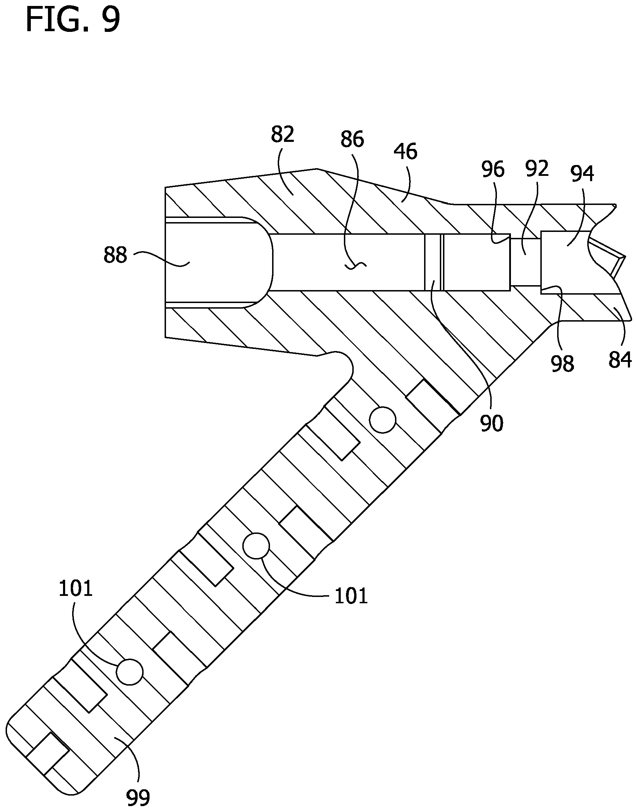

Referring to FIGS. 8 and 9, the elongate body 82 defines an internal passage 86 configured to receive a portion of the mounting assembly 48. In particular, a distal end of the guide rod 54, the gimbal joint connection (i.e., gimbal ring 58, fork 60, and pin 61), post 74, and screw 76 are received in the body 82 of the stylus 46. The internal passage 86 includes a first section 88, a second section 90 extending distally directly from the first section, a third section 92 extending distally directly from the second section, and a fourth section 94 extending distally directly from the third section. In the illustrated embodiment, the first section 88 is sized and shaped to receive the gimbal ring 58 and free end margins 66 of the fork 60. The second section 90 is sized and shaped to receive the arms 64 of the fork 60 and the post 74 extending from the fork. A first shoulder 96 is formed between the second section 90 and the third section 92. A distal end of the post 74 is configured to seat against the first shoulder 96 in the internal passage 86 of the stylus 46 to locate the mounting assembly 48 in the stylus. The head 80 of the screw 76 is configured to seat against a second shoulder 98 between the third section 92 and the fourth section 94 when the shaft 78 is threaded into the post 74. This captures the annular projection that defines the third section 92 between the post 74 and the head 80 of the screw 76 thereby attaching the stylus 46 to the mounting assembly 48 and coupling the stylus to the main body 30. It will be understood that the stylus 26 could be attached to the mounting assembly 48 by other means without departing from the scope of the disclosure.

A tracking target mount 99 may be disposed on or attached to (e.g., fixedly secured to) the stylus 46. The tracking target mount 99 is configured to mount one or more tracking targets 28. In the illustrated embodiment, the mount 99 defines a plurality of openings 101 configured to receive the tracking targets 28 therein. Therefore, the movement of the stylus 46 may be indicated by the tracking targets 28 and tracked by the cameras 24 of the tracking assembly 12. In particular, movement (e.g., translational or gliding movement) of the stylus 46 along a surface of the example structure ES by the operator can be tracked by the tracking assembly 12. Additionally, any floating and/or articulation (e.g., pivoting) of the stylus 46 as the stylus slides along the surface of the structure ES will also be captured by the tracking assembly 12. In the illustrated embodiments, three tracking targets 28 are shown attached to the mapping tool 16. However, any number of tracking targets 28 may be utilized and positioned in any number of locations on the mapping tool 16 to track the movement of the mapping tool. Additionally, in one embodiment, the tracking target mount 99 is formed integrally with the stylus 46. Alternatively, the tracking target mount 99 may be formed separately from the stylus 46 and suitably attached to the stylus without departing from the scope of the disclosure.

Referring to FIGS. 1 and 10-12, the robotic assembly 18 comprises the robot 20 and the end effector 22. The robot 20 can suitably comprise an industrial robot (e.g., a multi-axis robot such as a six-axis, seven-axis, eight-axis, or nine-axis robot) configured for medium to heavy duty handling. In the illustrated embodiment, the robot 20 includes a robotic arm assembly having a base 100 and a plurality of arm linkages 102 attached to the base for articulating an attachment end 104 of the robot. The robot 20 may be suitable for a variety of processes and manufacturing applications. Communication capabilities of the robot 20 may include seral links, network interfaces, PLC, remote I/O and field bus interfaces. In one embodiment, a load capacity of the robot 20 is about 60 kg at high speeds. The robot 20 may also be configured to hold multiple end effectors at one time. One suitable robot for use in the automation system 10 is the IRB 4400 made by ABB Robotics out of Zurich, Switzerland. Other robots from other robotic manufacturers may also be used without departing from the scope of the disclosure.

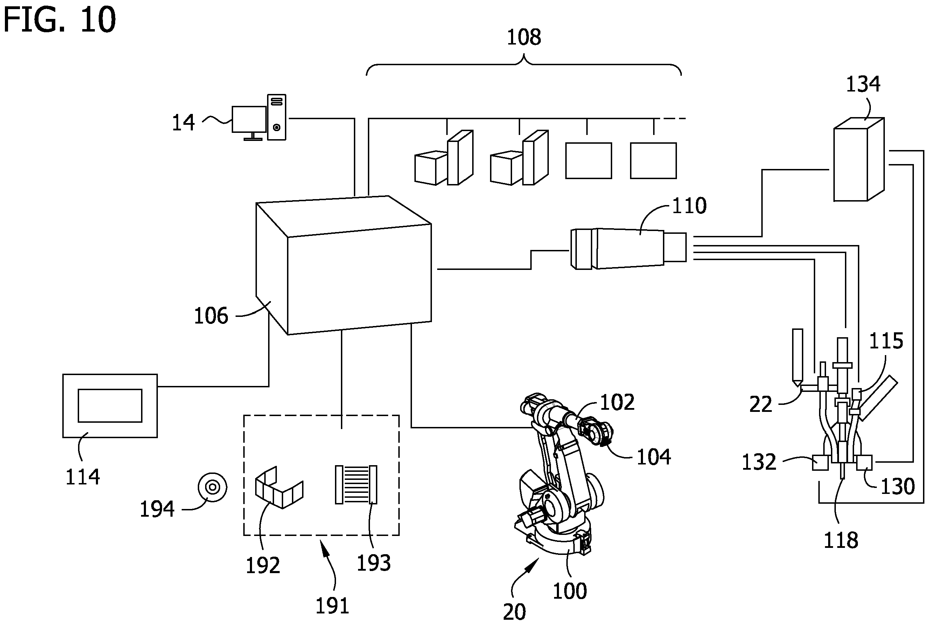

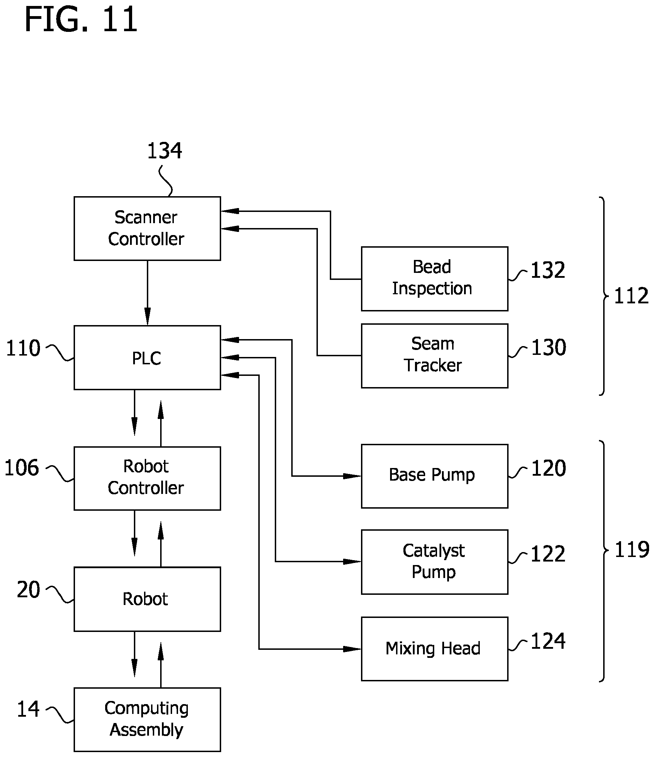

Referring to FIGS. 10 and 11, the robotic assembly 18 comprises a robot controller 106 operatively connected to the robot 20 for controlling operation of the robot. A motion control assembly 108 may also be operatively connected to the robot controller 106 for integrating motion control functionally with the robot controller to control the movement of the robot 20. Additionally, a programmable logic controller (PLC) 110 may also be operatively connected to the robot controller 106 and the end effector 22 for monitoring input devices of the robotic assembly 18 and controlling operation of one or more output devices of the robotic assembly (e.g., the end effector 22). In the illustrated embodiment, the PLC 110 is able to monitor the input from the robot controller 106 to automate a sealing process performed by the end effector 22 as will be discussed in further detail below. A seam tracking/inspection assembly 112 may also be connected to the PLC 110. The seam tracking/inspection assembly 112 configures the end effector 22 with a seam tracking/inspecting functionality as will be discussed in further detail below. The computing device 14 is operatively connected to the robot controller 106 for providing robot instructions to the robot controller (e.g., the robot instructions generated based on the teaching conducted using the teaching subsystem 11). The robot controller 106 is configured to execute the robot instructions to cause the robotic assembly 18 to perform an automated sealing task. In FIG. 10, a mobile device 114 is also operatively connected to the robot controller 106. The mobile device 114 can provide a teaching tool to the operator by displaying various factors regarding the status of the robotic assembly 18. The mobile device 114 may have other capabilities without departing from the scope of the disclosure. The robotic assembly 18 further comprises a safety system 191 including a safety barrier 192 for defining a restricted area containing the robot 20 and the manufactured structure MS. The safety system 191 optionally further comprises and an area sensor 193 and automatic safety switch 194 for shutting off the robot 20 when there is an unauthorized breach of the restricted area during robot operation.

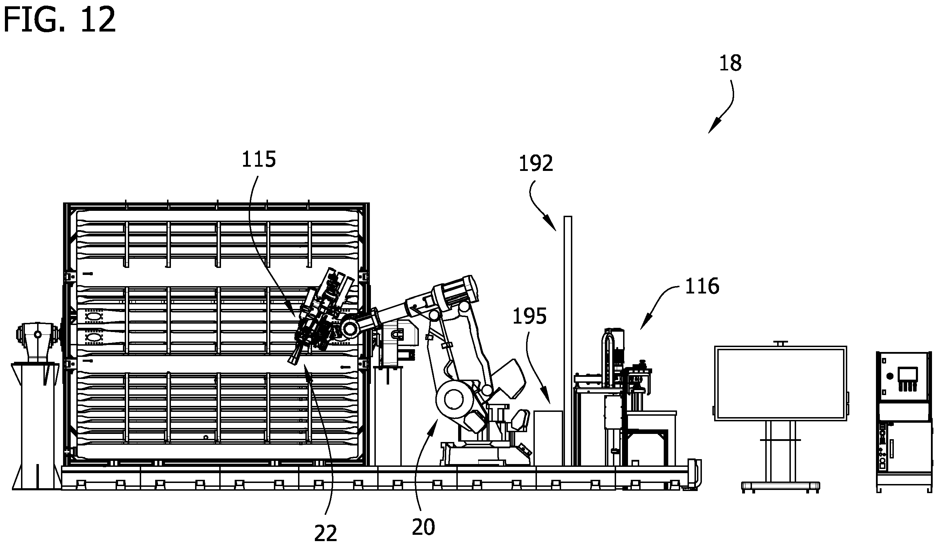

Referring to FIG. 12, the robotic assembly 18 comprises a feed pump 116 configured to pump one or more sealant components to a dispensing assembly 115 of the end effector 22. In the illustrated embodiment, the feed pump 116 is located on the opposite side of the safety barrier 192 from the robot 20 and end effector 22. This allows the feed pump 116 to pump sealant into the dispensing assembly 115 without an operator crossing the safety barrier. The robot 20 is configured to selectively couple the dispensing assembly 115 to the feed pump 116 via a pump coupler 195 located on the restricted side of the safety barrier 192. One or more hoses (not shown) cross the barrier 192 to connect the feed pump 116 to the pump coupler 195. Because the pump unit 116 can impart sealant material to the dispensing assembly 115 via the pump coupler 195, the dispensing assembly 115 does not rely on removable cartridges for sealant. This allows for use of more cost-effective bulk sealant materials and minimizes the need for crossing into the restricted side of the safety barrier 192.

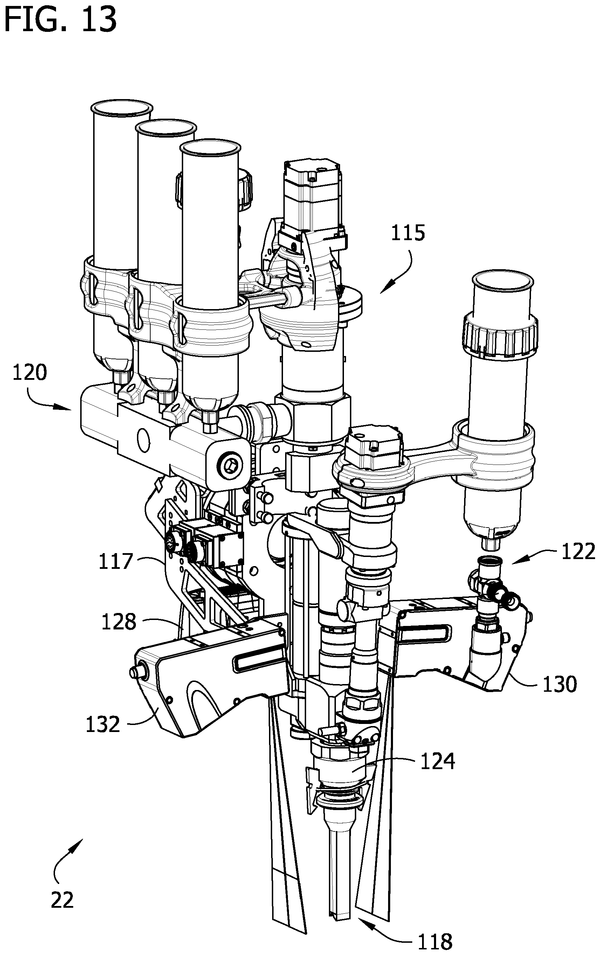

Referring to FIGS. 11 and 13, the dispensing assembly 115 has mix-on-demand capabilities for dispensing sealant through a nozzle 118 onto the manufactured structure MS. The dispensing assembly 115 is mounted on a frame 117 of the end effector 22. In the illustrated embodiment, the dispensing assembly 115 comprises pumping system 119 (FIG. 11) including a base pump 120 for pumping a sealant material, a catalyst pump 122 for pumping a catalyst material, and a mixing head 124 for mixing the sealant material and the catalyst material. The nozzle 118 is attached to the mixing head 124 such that sealant and catalyst materials are mixed in the mixing head and pumped through the nozzle. The nozzle 118 may be removably attached to the mixing head 124 so that the nozzle can be cleaned or replaced. In one or more embodiments, the robotic assembly 18 comprises a set of interchangeable nozzles 118 with different tip geometries for different sealing applications. As shown in FIG. 11, the robot controller 106 is configured to control the pumping system 119 via the PLC 110. In an exemplary embodiment, the dispensing assembly 115 is capable of mixing and dispensing a low-density, two-component epoxy sealant containing sensitive microspheres without damaging the microspheres.

In general, the sealing end effector 22 is configured for applying sealant to a seam of the manufactured structure MS. Referring again to FIG. 1, the tracking assembly 21 of the robotic assembly 18 is configured to track the location of one or more components inside the robot cell C. For example, the tracking assembly 21 can track the robot 20, end effector 22, and/or the manufactured structure MS in relation to a predefined frame of reference for the robot cell C. In one or more embodiments, the robot tracking assembly 21 employs the same basic technology as the teaching workspace tracking system 12 to track the location of the end effector 22 and the manufactured structure MS in the defined frame of reference for the robot cell C. Hence, the end effector 22 and the manufactured structure MS can be fitted with trackable markers (not shown), motion capture cameras of the tracking system 21 can acquire images (e.g., video images) of a cell, and tracking computer (not shown) of the tracking system 21 can determine the position, orientation, and/or movement paths of the end effector 22 and/or the manufactured structure MS based on the trackable markers detected in the motion capture images. In one or more embodiments, the robot controller 106 is connected to the tracking system 21 and configured to use the tracking information to control movement of the robot 20 along the notional robot path RP. Other ways of guiding movement of the robot in relation to the manufactured structure MS along the robot path RP may also be used without departing from the scope of the disclosure.

Referring to FIGS. 11 and 13, the end effector 22 comprises a seam tracking/inspection assembly 112 for aligning the end effector with the seam ('seam tracking') and verifying the application and quality of the sealant applied to the seam ('seam inspection'). While the motion capture tracking system 21 is able to guide robot movement along the notional robot path RP, for an automated sealing process, more precise control may be desirable to ensure that the nozzle 118 of the end effector 22 is properly aligned to the seam of the manufactured structure MS as it is positioned in the robot cell C. The seam tracking/inspection assembly 112 provides the additional precision required to ensure proper alignment of the nozzle 118 to the seam. In addition, the seam tracking/inspection assembly 112 provides real time verification of whether the sealant is being applied according to required specifications.

Certain components of the seam tracking/inspection assembly 112 are mounted on the frame 117 of the end effector 22 with the dispensing assembly 115. In particular, the seam tracking/inspection system 112 comprises a seam tracker 130 and an inspector 132 that are each mounted on the frame 117 with the dispensing assembly 115. In general, the seam tracker 130 is configured for seam tracking and the inspector 132 is configured for sealant inspection. In the illustrated embodiment, the seam tracker 130 and inspector 132 are both profile measurement devices for outputting signals representing surface profile geometry (e.g., two dimensional surface profile measurements). In one embodiment, the seam tracker 130 comprises a first laser scanner, and the inspector 132 comprises a second laser scanner. The seam tracker 130 and the inspector 132 are configured to output real time surface profile measurements to a system controller 134 of the seam tracking/inspection system 112. The system controller 134 is operatively connected to the robot controller 106. Together, the system controller 134 and the robot controller 106 use the profile measurements from the seam tracker 130 to precisely align and center the end effector 22 in relation to the seam. The system controller 134 uses the profile measurements from the inspector 132 for real time verification that the sealant is being applied at the required specifications. In the illustrated embodiment, the seam tracking/inspection assembly 112 further includes a camera 128 configured to acquire images of a seam of the manufactured structure MS being sealed. The camera 128 provides images for further verification that the sealant is being applied properly.

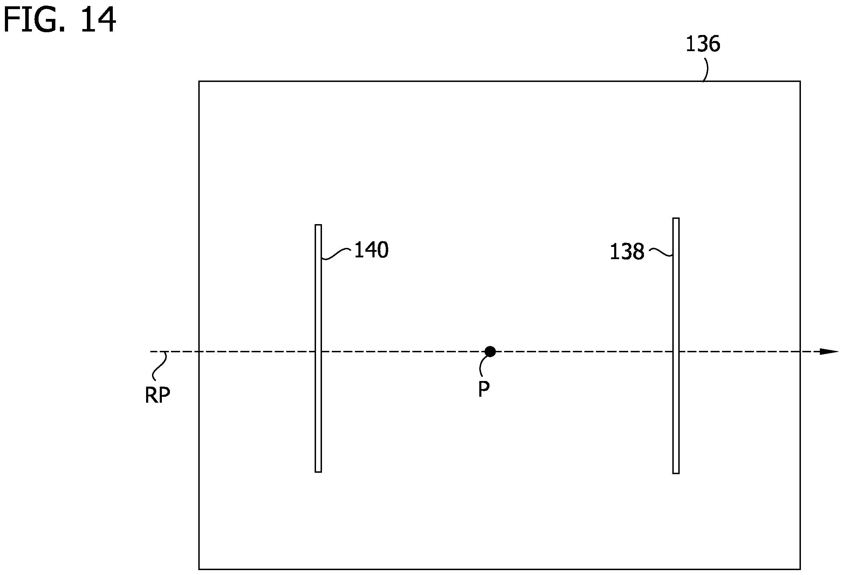

Referring to FIGS. 13 and 14, the seam tracking/inspection assembly 112 is configured to both (i) track a robot path RP of the end effector 22 to monitor whether the robot 20 is moving the end effector along the intended path and (ii) inspect an output of the end effector to verify that the operation of the end effector has been properly conducted. In particular, the camera 128 may be mounted on the frame 117 such that a viewing area 136 of the camera includes an application point P of the nozzle 118 along with areas on leading and trailing sides of the application point (FIG. 14). Additionally, the seam tracker 130 is mounted on the frame 117 such that a scan area 138 of the seam tracker is located on a first (leading) side of the application point P, and the inspector 132 is mounted on the frame such that a scan area 140 of the inspector is located on an opposite second (trailing) side of the application point. Movement of the dispensing assembly 115 will occur along the robot path RP in the direction of the leading side such that the seam tracker 130 will see an upcoming portion of the seam prior to the nozzle 118 being disposed over the portion of the seam. Thus, the seam tracker 130 is configured to provide seam tracking data to ensure the robot 20 maintains its position along the seam for proper fillet seal application by the dispensing assembly 115. Additionally, the inspector 132 will see the seam after the nozzle 118 has passed over the seam. Therefore, the inspector 132 is positioned to provide an in-process inspection of the fillet application to ensure the fillet seal is applied dimensionally within the process specification.

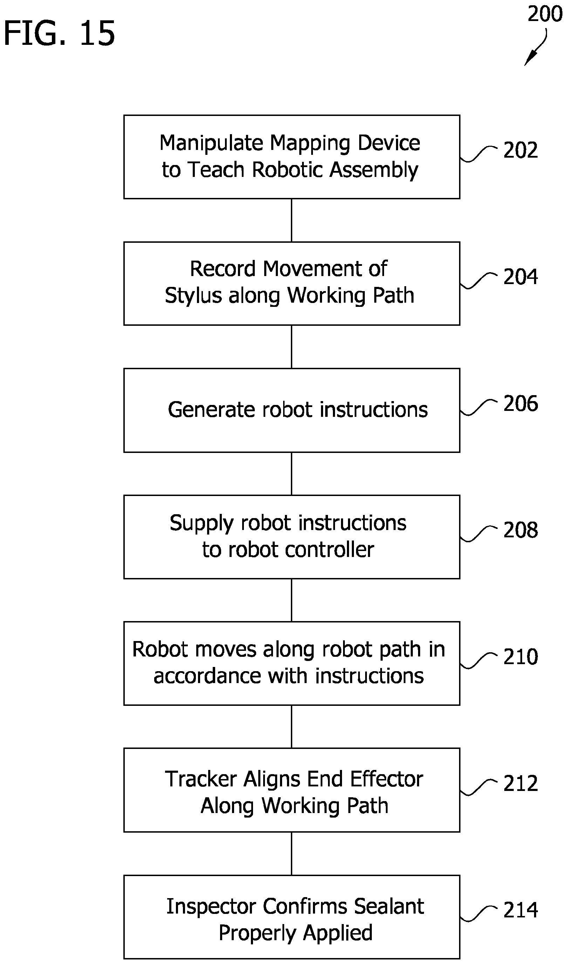

Referring to FIGS. 15-21, a process for operating the robot automation system 10 for sealing a structure is illustrated. Figure 15 shows a flow diagram representing an example method at 200 for controlling the operation of the robot automation system 10. The method begins at 202, where the mapping tool 16 is manipulated by the operator in the teaching workspace TW to teach the robotic assembly 18 the movement path for performing the sealing operation. In particular, the operator moves the mapping tool 16 to engage the mapping head 84 of the stylus 46 with a surface (e.g., seam) of the example structure ES. The operator then actuates the trigger 44 to initiate recording of the working path WP. The tracked movements of the mapping tool 16 will only be converted to robot instructions when the trigger 44 is pressed. With the cameras 24 recording the workspace, the mapping head 84 is manually slid along a seam of the structure. The articulating joint allows the mapping head 84 to move (e.g., pivot) naturally in response to the changes in the profile of the seam in the example structure ES. This ensures that the orientation of the stylus 46 during the teaching process matches the required orientation of the end effector nozzle 118 during robotic sealing of a seam having the same profile shape. At 204 the tracking assembly 12 records the movement of the stylus 46 along the working path WP and simultaneously generates a real-time augmented reality animation of the movement in the augmented reality environment 270 (FIG. 17).

At 206 the computing device 14 receives data from the tracking computer 26 and the mapping tool controller 38 and automatically generates robot instructions based on the data. In an exemplary embodiment, the computing device 14 executes the artificial intelligence-based robot programming engine 401 to formulate the robot instructions to comply with predefined process specifications and predefined task definitions. The robot programming engine 401 also automatically configures the robot instructions to define a notional robot path RP that corresponds to the working path WP traversed by the mapping tool 16 in step 202. Because the notional robot path RP is known, the robot programming engine is able to use a machine learning model to further configure the robot instructions to modulate the movement (e.g., speed) of the robot 22 in accordance with the surface profile along the seam.

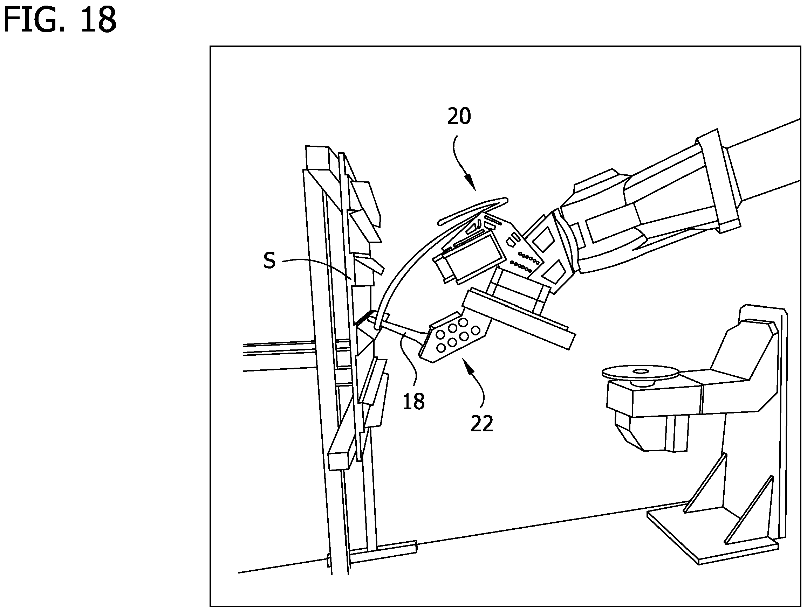

At 208 the robot instructions generated in step 206 are supplied to the robot controller 106. Based on the robot instructions, at 210, the robot controller 106 causes the robot 20 to move the end effector 22 along the robot path RP to apply sealant along the seam on the manufactured structure MS. Figure 18 provides an illustration of the robot 20 moving the end effector 22 along the robot path RP during step 210. Optionally, the tracking assembly 21 records the movement of the robot 20 along the working path RP and simultaneously generates a real-time augmented reality animation of the movement in the augmented reality environment 272 (FIG. 19).

The movement of the robot 20 along the robot path RP mimics the movement of the mapping tool 16 along the working path WP in the teaching workspace TW. Since the notional robot path RP is known from the teaching process, the robot controller 106 effectively 'sees ahead' and thereby anticipates the characteristic changes in the profile along the seam. With this advance knowledge, the robot 20 automatically adjusts its speed (i.e., speed up or slow down) to accommodate for the change in terrain of the seam. Additionally, at 212, based on data from the seam tracker 130, the robot 20 precisely aligns the end effector 22 to the exact location of the seam in the manufactured structure MS and maintains alignment as it moves along the seam. At 214, data from the inspector 132 is used to confirm in real time that the sealant that has been applied meets all process specifications. This ensures that only a single pass of the end effector 22 is required to complete the sealant application and eliminates the need for any rework.

The robot automation system 10 and process 200 described above enable automatic programming of the robotic assembly 18 to perform a specified sealing operation. Using the teaching subsystem 11 significantly reduces the time required for robot programming compared with conventional methods. In one embodiment, robot programming is reduced by more than 90%, from on the order of several months, to merely a few hours. The operations of the teaching subsystem 11 and the computing device 14 quickly generate robot instructions that facilitate real-time closed-loop feedback controls and enable the system 10 execute the automated sealing operation in one pass at the proper robot speed. The artificial intelligence-based robot programming engine 401 automatically configures the robot instructions to comply with task-planning and specification requirements, define a notional robot path RP, and modulate the movement (e.g., speed) of the robot 20 in accordance with the surface profile along the seam. In addition, the seam tracking and inspection system 112 provide further feedback that precisely aligns the sealing end effector 22 with the seam on the manufactured structure MS and provides real time verification of proper sealant application. Accordingly, the systems and methods described herein can provide a solution to one or more technical problems involved with automating robotic manufacturing tasks for high-mix, low volume manufactured parts. As explained above, although one particularly useful application for the systems and methods of the present disclosure is for automating the application of sealant to manufactured parts, the principles of the robot automation system of the present disclosure can also be used to automate other robotic manufacturing processes.

Although described in connection with an exemplary computing system environment, embodiments of the aspects of the disclosure are operational with numerous other general purpose or special purpose computing system environments or configurations. The computing system environment is not intended to suggest any limitation as to the scope of use or functionality of any aspect of the disclosure. Moreover, the computing system environment should not be interpreted as having any dependency or requirement relating to any one or combination of components illustrated in the exemplary operating environment. Examples of well-known computing systems, environments, and/or configurations that may be suitable for use with aspects of the disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the disclosure.

Embodiments of the aspects of the disclosure may be implemented with processor-executable instructions. The processor-executable instructions may be organized into one or more processor-executable components or modules on a tangible processor readable storage medium. Aspects of the disclosure may be implemented with any number and organization of such components or modules. For example, aspects of the disclosure are not limited to the specific processor-executable instructions or the specific components or modules illustrated in the figures and described herein. Other embodiments of the aspects of the disclosure may include different processor-executable instructions or components having more or less functionality than illustrated and described herein.

The order of execution or performance of the operations in embodiments of the aspects of the disclosure illustrated and described herein is not essential, unless otherwise specified. That is, the operations may be performed in any order, unless otherwise specified, and embodiments of the aspects of the disclosure may include additional or fewer operations than those disclosed herein. For example, it is contemplated that executing or performing a particular operation before, contemporaneously with, or after another operation is within the scope of aspects of the disclosure.

Having described the invention in detail, it will be apparent that modifications and variations are possible without departing from the scope of the invention defined in the appended claims.

When introducing elements of the present invention or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

### OTHER STATEMENTS OF THE INVENTION

A1. An end effector for use in a robotic assembly comprising:
a frame;
a dispensing assembly mounted on the frame and configured for applying sealant to a seam of a structure;
a seam tracker mounted on the frame and configured to track the seam on the structure as the dispensing assembly is moved along the seam to apply the sealant;
   and
an inspector mounted on the frame and configured to inspect the sealant applied to the seam by the dispensing assembly.

A2. The end effector of A1 wherein the seam tracker comprises a first laser and the inspector comprises a second laser.

A3. The end effector of A1 wherein the dispensing assembly comprises a pumping system for driving the sealant through the dispensing assembly, and a nozzle attached to the pumping system for spraying the sealant onto the structure.

A4. The end effector of A3 wherein the pumping system comprises a base pump, a catalyst pump, and a mixing head.

A5. The end effector of A4 wherein the nozzle is removably attached to the mixing head.

A6. The end effector of A1 further comprising a scanner controller configured to perform calculations for determining whether the dispensing assembly is moving over the seam along an intended path, and for detecting a quality of the sealant applied to the seam.

A7. The end effector of A6 wherein the scanner controller is configured to continuously stream data to a robot controller of the robotic assembly.

A8. The end effector of A1 further comprising a camera mounted on the frame such that a viewing area of the camera includes an application point of the nozzle.

A9. The end effector of A1 wherein the seam tracker is mounted on the frame such that a scan area of the seam tracker is located on a first side of the application point of the nozzle, and the inspector is mounted on the frame such that a scan area of the inspector is located on a second side of the application point, opposite the first side.

B1. A mapping tool for communicating information for use in an augmented reality environment, the mapping tool comprising:
a body enclosing internal electrical components;
a stylus assembly movably attached to the body for engaging a structure in a workspace; and
a handle attached to the body for grasping the mapping tool to manipulate the mapping tool within the workspace.

B2. The mapping tool of B1 further comprising a controller disposed within the body and configured to control operation of the mapping tool.

B3. The mapping tool of B2 further comprising a transmitter disposed within the body and configured to wirelessly transmit signals to a computing device external to the mapping tool.

B4. The mapping tool of B2 further comprising a power switch mounted on the body.

B5. The mapping tool of B4 wherein the power switch is operatively connected to the controller such that toggling the switch is configured to turn the mapping tool on and off.

B6. The mapping tool of B5 further comprising an indicator light on the body and configured to illuminate when the mapping tool is powered on.

B7. The mapping tool of B1 further comprising a port disposed on the body and configured for providing a wired connection to the internal electrical components.

B8. The mapping tool of B1 wherein the stylus assembly comprises a stylus and a mounting assembly connecting the stylus to the body.

B9. The mapping tool of B8 wherein the stylus is configured to float on the mounting assembly.

B10. The mapping tool of B9 wherein the mounting assembly includes a mounting rod and a spring coupled to the mounting rod, the stylus seating on the spring to facilitate axial movement of the stylus relative to the mounting rod.

B11. The mapping tool of B 10 wherein the mounting assembly further comprises a joint connection for providing articulation of the stylus relative to the mounting rod.

B12. The mapping tool of B11 wherein the joint connection comprises a gimbal joint.

B13. The mapping tool of B8 wherein the stylus comprises an elongate body including a mapping head disposed at a distal end of the elongate body.

B14. The mapping tool of B13 wherein the mapping head of the stylus is configured to match a size and shape of an operation end of an end effector of a robotic assembly.

B15. The mapping tool of B14 wherein the elongate body defines an internal passage configured to receive a portion of the mounting assembly.

B16. The mapping tool of B8 further comprising a tracking target mount disposed on the stylus, the tracking target mount being configured to mount one or more tracking targets.

## Claims

1. A computer-implemented method of performing an automated robotic manufacturing process, the method comprising:
receiving image data regarding a teaching workspace and a teaching structure disposed in the teaching workspace;
based on the received image data, tracking movement of a mapping tool along a working path within the teaching workspace;
automatically generating robot instructions for controlling a robot to move along a robot path corresponding to the working path based on the tracked movement of the mapping tool along the working path; and
instructing the robot to perform the automated robotic manufacturing process on a manufactured structure based on said robot instructions.

2. The method of claim 1, wherein the automated robotic manufacturing process comprises automated robotic sealing.

3. The method of claim 1 or 2, wherein said automatically generating the robot instructions comprises:
inputting the tracked movement of the mapping tool to an artificial intelligence-based robot programming engine and using the artificial intelligence-based robot programming engine to formulate the robot instructions to at least one of (i) comply with predefined process specifications, (ii) comply with predefined task definitions, and/or (iii) modulate movement of the robot along the robot path;
and/or
formulating the robot instructions to modulate robot speed in accordance with a surface profile along the seam determined from the tracked movement of the mapping tool along the working path.

4. The method of any preceding claim, wherein said instructing the robot to perform the automated robotic manufacturing process based on said robot instructions comprises executing said robot instructions on a robot controller of the robot;
optionally wherein said executing said robot instructions on the robot controller causes the robot to move an end effector along the robot path.

5. The method of claim 3 or 4, further comprising aligning movement of the end effector with a seam of the manufactured structure using a seam tracker mounted on the end effector;
the method optionally further comprising inspecting a result of the automated robotic manufacturing process in real time using an inspector mounted on the end effector.

6. The method of any preceding claim, further comprising generating a real-time augmented reality environment depicting at least one of:
the mapping tool moving along the working path; and
the robot moving along the robot path.

7. A system for automatic programming of a robotic assembly to perform an automatic robotic manufacturing process, the system comprising:
a tracking assembly;
a mapping tool; and
a computing device having a processor and a memory, the processor in communication with said tracking assembly and said mapping tool, said processor configured to:
receive tracking data from the tracking assembly and the mapping tool indicating movement of the mapping tool along a working path within a teaching workspace; and
based on said tracking data, automatically generate robot instructions, said robot instructions being configured for execution by a robot controller of the robotic assembly to cause the robotic assembly to perform the automatic robotic manufacturing process by moving along a robot path corresponding to the working path.

8. The system of claim 7, wherein the tracking assembly comprises a plurality of motion capture cameras configured to generate motion capture images of the teaching workspace and a tracking computer operatively connected to the motion capture cameras for receiving motion capture images.

9. The system of claim 8, wherein the mapping tool comprises a plurality of tracking targets, wherein the tracking computer is configured to detect the tracking targets in the motion capture images and determine location and orientation of the mapping tool in the teaching workspace based on the tracking targets.

10. The system of claim 9, wherein the mapping tool comprises a trigger configured to indicate when movement of the mapping tool in the teaching workspace represents the working path.

11. The system of claim 9 or 10, wherein the mapping tool comprises a handle, a stylus, and an articulating joint between the handle and the stylus, the stylus having a distal end portion configured for gliding along a surface of a teaching structure, the articulating joint configured to allow the stylus to articulate about the articulating joint in relation to the handle as the stylus glides along the surface, the tracking targets being fixed in relation to the stylus such that the tracking targets move with the stylus in relation to the handle as the stylus articulates;
wherein the distal end portion of the stylus is optionally shaped to match a shape of a nozzle of a sealing end effector of the robotic assembly.

12. The system of any one of claims 7 to 11, wherein the processor is configured to process the tracking data in an artificial intelligence-based robot programming engine to formulate the robot instructions to at least one of (i) comply with predefined process specifications, (ii) comply with predefined task definitions, and/or (iii) modulate movement of the robot along the robot path.

13. The system of any one of claims 7 to 12, further comprising a display, the processor being configured to generate, based on the tracking data, a real-time augmented reality environment depicting movement of the mapping tool in the teaching workspace.

14. An automation system for facilitating automated robotic manufacturing processes, the automation system comprising:
a teaching subsystem comprising:
a mapping tool; and
a tracking assembly configured for tracking movement of the mapping tool in a teaching workspace; and
a computing device having a processor and a memory, said processor in communication with the tracking assembly and the mapping tool, said processor configured to:
receive tracking data from the tracking assembly and the mapping tool indicating movement of the mapping tool along a working path; and
based on said tracking data, automatically generate robot instructions; and
a robotic assembly comprising:
a robot;
an end effector; and
a robot controller configured to receive the robot instructions from the computing device and execute the robot instructions whereby the robot controller controls the robot and the end effector to conduct the automated robotic manufacturing process.

15. The automated system of claim 14, wherein the robotic assembly further comprises a seam tracking/inspection assembly;
optionally wherein the seam tracking/inspection assembly is configured to align movement of the robotic assembly along the working path and confirm the automated robotic manufacturing process is conducted properly.
